# EUROPÄISCHE PATENTSCHRIFT

(11) **EP 3 895 253 B1**
(45) Veröffentlichungstag und Bekanntmachung des Hinweises auf die Patenterteilung: **02.08.2023**
(21) Anmeldenummer: 20701587.6
(22) Anmeldetag: 22.01.2020
(51) Int. Cl.: H01R 4/02, H01R 43/02, H01R 4/62, B23K 20/12, H01R 4/34

(54) **ELEKTRISCHER LEITER SOWIE VERFAHREN ZUR HERSTELLUNG EINES ELEKTRISCHEN LEITERS**
ELECTRICAL CONDUCTOR AND METHOD FOR PRODUCING AN ELECTRICAL CONDUCTOR
CONDUCTEUR ÉLECTRIQUE AINSI QUE PROCÉDÉ DE FABRICATION D'UN CONDUCTEUR ÉLECTRIQUE

(30) Priorität: 20.02.2019 DE 102019104318
(43) Veröffentlichungstag der Anmeldung: 20.10.2021
(73) Patentinhaber: Auto-Kabel Management GmbH, 79688 Hausen i.W. (DE)
(72) Erfinder: SCHARKOWSKI, Oliver, 03172 Schenkendöbern OT Atterwasch (DE)
(74) Vertreter: Cohausz & Florack
(86) Internationale Anmeldenummer: PCT/EP2020/051451
(87) Internationale Veröffentlichungsnummer: WO 2020/169295

(56) Entgegenhaltungen:
- EP-A2- 0 726 613
- WO-A1-2017/167463
- DE-A1-102004 034 497
- DE-A1-102006 050 708
- DE-A1-102008 056 133
- DE-A1-102016 013 700
- DE-U1-202015 100 319

## Beschreibung

Der Gegenstand betrifft eine Anordnung eines elektrischen Leiters und eines Kontaktteils sowie ein Verfahren zur Herstellung einer solchen Anordnung eines elektrischen Leiters, insbesondere eines Batterieleiters, insbesondere in Form eine Flachleiters, insbesondere für automotive Anwendungen.

In der Automobilindustrie werden in jüngster Zeit immer häufiger Flachleitungen (auch als Flachbandleitungen bezeichnet) anstelle von Rundleitungen verwendet. Insbesondere für Batterieleitungen, bevorzugt die B+ Leitung, auf denen hohe Ströme fließen, hat sich die Flachbandleitung als vorteilhaft herausgestellt. Mit Hilfe der Flachbandleitung ist es möglich, aufgrund des Formfaktors auf kleinem Bauraum, insbesondere engen, unzugänglichen Bereichen, große Leitungsquerschnitte zu realisieren, was die Stromtragfähigkeit der Batterieleitungen verbessert. Auch für Elektrofahrzeuge, bei denen Spannungen von mehreren 100V über die Batterieleitungen abgerufen werden, kommen Flachbandleitungen vermehrt zum Einsatz. Auch hier müssen die Energieleitungen hohe Anforderungen an Stromtragfähigkeit und Leistung erfüllen.

Für die Kontaktierung von elektrischen Verbrauchern werden jedoch weiterhin Rundleiter verwendet. Dies vor allem aus dem Grund, dass die elektrischen Verbraucher zumeist über flexible Leitungen kontaktiert werden müssen. Beim Einbau der Verbindungsleitungen zwischen starrer Batterieleitung und elektrischem Verbraucher ist es häufig erforderlich, dass die Leitungen in enge Bauräume eingefädelt werden müssen, was mit Hilfe von Rundleitern leichter ist als mit starren Flachbandleitern. Daher ist beim Einsatz von Flachbandleitern als Hauptstrang für die Batterieleitung eine Kontaktierung zwischen Flachbandleiter und Rundleiter unerlässlich. Eine solche Kontaktierung kann beispielsweise über einen Anschlussbolzen erfolgen. An den Anschlussbolzen kann dann eine Rundleitung beispielsweise mittels Reibschweißen elektrisch kontaktiert werden. Abgänge zu elektrischen Verbrauchern können an verschiedenen Stellen entlang des Flachbandleiters angeordnet werden. Der so gebildete Kabelstrang kann in einem KfZ verbaut werden und die elektrischen Verbraucher werden über die Rundleiter mit dem Batteriestrang verbunden.

Es hat sich jedoch gezeigt, dass die Anbringung von Anschlussbolzen an Flachbandleiter in vielen Fällen problematisch ist. Solche Verbindungen müssen elektrisch stabil und vor Umwelteinflüssen geschützt sein. Bei der Verwendung von Aluminium als Leitermaterial des Flachbandleiters muss weiterhin sichergestellt sein, dass dieser sich beim Anschluss des Anschlussbolzens nicht verformt. Insbesondere bei der Verschraubung des Anschlussbolzens kann es dazu kommen, dass sich die Schraube in das Aluminium hineindrückt. Aufgrund der relativ hohen Viskosität von Aluminium gegenüber anderen Metallen besteht das Problem darin, dass Anzugsmomente für die Schraubverbindungen der Anschlussbolzen eventuell nicht eingehalten werden können. Außerdem kann es dazu kommen, dass sich die Verschraubungen bei mechanischer Beanspruchung lösen, da sich das Aluminium des Flachbandleiters unter den Verschraubungen verformen kann. Darüber hinaus sind Übergänge zwischen Aluminium und edleren Metallen, wie beispielsweise Kupfer, anfällig gegenüber Kontaktkorrosion. Direkte Verbindungspunkte müssen vor Umwelteinflüssen geschützt werden.

Aus der DE 0 758 107 A ist ein Verfahren zur Herstellung eines Kabelschuhs aus Aluminium oder einer Aluminiumverbindung bekannt, dessen Anschlussauge mit einer Schutzschicht versehen ist, dadurch gekennzeichnet, dass das Auge des Kabelschuhs zunächst auf galvanischem Wege mit einer Schicht aus elektrisch gut leitendem Werkstoff überzogen wird und hierauf zum Schutz der empfindlichen dünnen, galvanischen Schicht als weitere stärkere Schutzauflage eine die Bohrung des Auges auskleidende, aus dem gleichen Werkstoff bestehende Öse, deren Flansche die Kontaktflächen des Auges ganz oder teilweise überdecken, in beliebiger Weise aufgebracht wird.

Aus der WO 2006/057592 A1 ist ferner ein Verfahren und ein Gerät zum Verbinden eines elektrischen Leiters mit einer Metallstange, z.B. einer Eisenbahnschiene, durch eine geschraubte Verbindung bekannt. Das Dokument bezieht sich auch auf ein Werkzeug zum Befestigen einer Hülse in der Metallstange. Die Hülse bildet einen Teil der geschraubten Verbindung.

Aus der DE 10 2006 050 708 A1 ist eines Reibschweißhülse bekannt, die in eine Öffnung eines Flachleiters geschweißt ist.

Aus der DE 2008 0561 133 A1 ist eine Anordnung nach dem Oberbegriff des Anspruchs 1 zum Herstellen einer elektrischen Verbindung zwischen einer elektrischen Leitung und einer elektrisch leitfähigen Struktur, insbesondere einer Fahrzeugkarosserie, umfassend ein mit der Struktur verschweißbares erstes Anschlusselement und ein mit dem ersten Anschlusselement durch eine Schraubverbindung lösbar verbindbares zweites Anschlusselement, mit welchen ein Kontaktelement der elektrischen Leitung fixierbar ist, bekannt.

Die DE 10 2016 013 7100 A1 betrifft eine Schweißmutter.

Die DE 20 2015 100 319 U1 betrifft allgemein reibgeschweißte Baugruppen, insbesondere rotationsgeschweißte elektrische Massebaugruppen für Fahrzeuganwendungen.

Problematisch an der Kontaktierung zwischen dem Anschlussauge und dem Flachleiter sind metallische Beschichtungen des Anschlussauges und/oder des Flachleiters. Der Beschichtungswerkstoff hat in der Regel andere mechanische und chemische Eigenschaften als der Werkstoff des Anschlussauges oder des Leiters. Beschichtungswerkstoffe, insbesondere Nickel, können einen höheren Schmelzpunkt und/oder eine höhere Härte aufweisen. Bei Verschweißen ist dies nachteilig, da durch verschiedene Schmelzpunkte der Fügepartner der Schweißprozess behindert ist. Dem Gegenstand lag somit die Aufgabe zugrunde, die Verbindung zwischen einen Leiter und einen Kontaktteil mittels Schweißen zu vereinfachen.

Diese Aufgabe wird durch eine Anordnung nach Anspruch 1, sowie ein Verfahren nach Anspruch 15 gelöst. Gegenständlich wird ein Leiter, insbesondere ein Flachleiter (Flachbandleiter) mit einer Durchgangsöffnung zur Verfügung gestellt. Die Durchgangsöffnung ist vorzugsweise eine Bohrung. Die Bohrung kann zylindrisch sein oder kegelstumpfförmig. Die Bohrung ist vorzugsweise angepasst an das in die Durchgangsöffnung eingefügte Kontaktteil, welches ebenfalls gegenständlich zur Verfügung gestellt wird, insbesondere an den Querschnitt des Kontaktteils in seinem ersten Abschnitt.

Insbesondere bei der Verwendung eines gegenständlichen Leiters in automotiven Anwendungen, beispielsweise als elektrischen Energieleiter, beispielsweise als Batterieleiter, beispielsweise als B+ Leiter oder B- Leiter oder als Leiter in einem zumindest doppellagigen Kabel, besteht stets die Herausforderung, elektrische Abgänge an dem Leitern zur Verfügung zu stellen. Gerade in automotiven Anwendungen sind die elektrischen Leiter problematischen Betriebs- und Umweltbedingungen ausgesetzt. Die Umweltbedingungen können höchst unterschiedlich sein, so dass Verbindungsstellen an dem elektrischen Leiter stark schwankenden Temperaturen, Feuchtigkeit, Elektrolyten und dergleichen ausgesetzt sind. Diese Umweltbedingungen, welche insbesondere auch zu thermischen Ausdehnungen führen oder eine Kontaktkorrosion beschleunigen, erfordern eine möglichst sichere Befestigung des Bolzens an dem elektrischen Leiter. Auf der anderen Seite wird ein elektrischer Leiter, insbesondere in automotiven Anwendungen, dynamisch belastet. Ein elektrischer Abgang, der durch einen Bolzen gebildet ist, muss auch diesen dynamischen Belastungen standhalten und stets sicher und elektrisch gut leitend an dem elektrischen Leiter angeordnet sein.

Um eine Verbindung zwischen einem elektrischen Leiter und einem Abgang, beispielsweise einem Bolzen, insbesondere einer Schraube oder dergleichen zu ermöglichen, wird vorgeschlagen, dass ein stoffschlüssig an oder in der Durchgangsöffnung verschweißtes Kontaktteil vorgesehen ist. Durch die stoffschlüssige Verbindung des Kontaktteils mit dem Leiter ist eine sichere Kontaktierung an dem Leiter gewährleistet. Das Kontaktteil kann als Hülse mit einer Durchgangsbohrung gebildet sein.

Das Anbringen des Kontaktteils an der Öffnung ist jedoch prozesstechnisch anspruchsvoll.

Insbesondere dann, wenn das Kontaktteil metallisch beschichtet ist, kann es dazu kommen, dass eine Schweißverbindung prozesstechnisch problematisch ist. Hat der Beschichtungswerkstoff eine andere Schmelztemperatur und/oder Oberflächenhärte als der Leiter, kann es beim Verschweißen zu Problemen kommen. Insbesondere bei einem Reibschweißprozess, einem Magnetimpulsschweißprozess und einem Widerstandsschweißprozess kann durch die unterschiedliche Schmelztemperatur die gewünschte Wechselwirkung zwischen den Fügepartnern gegebenenfalls nicht eintreten. Für das Verschweißen ist es notwendig, dass beide Fügepartner aufgeschmolzen werden. Hat einer der Fügepartner eine Oberfläche aus einem Material mit einer sehr hohen Schmelztemperatur, kann dies gegebenenfalls nicht passieren. Die höhere Schmelztemperatur erfordert einen höheren Energieeintrag, um ein Aufschmelzen zu bewirken.

Das Kontaktteil ist aus zumindest zwei Abschnitten gebildet. Die beiden Abschnitte erstrecken sich in axialer Richtung des Kontaktteils. Ein erster Abschnitt hat dabei einen ersten Umfang und ein zweiter Abschnitt hat dabei einen zweiten, größeren Außenumfang als der erste Außenumfang. Der zweite Abschnitt kann somit radial nach außen gegenüber dem ersten Abschnitt auskragen. Beim Befestigen das Kontaktteils an der Durchgangsöffnung des Leiters wird das Kontaktteil vorzugsweise mit dem ersten Abschnitt in die Durchgangsöffnung des Leiters eingesteckt. Der zweite Abschnitt führt dazu, dass die Einstecktiefe des Kontaktteils in der Durchgangsöffnung des Leiters begrenzt ist, da der zweite Abschnitt einen Anschlag bildet.

Nachdem das Kontaktteil in die Durchgangsöffnung des Leiters eingesteckt wurde, kann der Reibschweißvorgang beginnen. Beim Reibschweißvorgang wird das Kontaktteil vorzugsweise im Bereich der Berührfläche zwischen dem Flachleiter und dem zweiten Abschnitt mittels Reibschweißen verschweißt. Durch einen Anpressdruck auf das Kontaktteil wird der zweite Abschnitt gegen die Oberfläche des Leiters gepresst. Es ist erkannt worden, dass gerade in diesem Bereich die größte Schweißenergie auftritt und insbesondere dieser Bereich zuerst mittels Reibschweißen verschweißt werden wird.

Der zweite Abschnitt ist als Flansch gebildet und dient einerseits als Anlagefläche an den Flachleitern und andererseits als vergrößerte Auflagefläche für einen Anschlussbolzen oder einen Anschluss eines Verbrauchers. Die Anlagefläche ist die dem Leiter zugewandte Fläche. Die Auflagefläche ist die dieser gegenüberliegende Fläche. Die Auflagefläche ist anders als die Anlagefläche bevorzugt eben. Ein Kopf eines Anschlussbolzens oder eine an den Anschlussbolzen verschraubte Mutter oder eine Unterlegscheibe kann an der dem Flachleiter abgewandten Oberfläche des Flansches aufliegen. Auch kann ein Anschluss eines Verbrauchers auf der Auflagefläche angeordnet werden. Die Auflagefläche kann rund, rechteckig, quadratisch, vieleckig oder dergleichen sein. Entlang des Umfangs kann die Anlagefläche radial weiter nach außen ragende Bereiche und radial weniger weit nach außen ragende Bereiche aufweisen. Die Auflagefläche kann eine ein, zwei- drei oder mehrachsige Geometrie aufweisen. Die Auflagefläche kann eine Rauheit haben, die größer ist als die Rauheit der Oberfläche des Flachleiters. Hierdurch kann eine Kontaktierung eines Kontakts an der Auflagefläche, z.B. mittels Reibschweißen, begünstigt werden.

Es hat sich herausgestellt, dass es besonders vorteilhaft ist, wenn der erste und der zweite Abschnitt einstückig gebildet sind. Insbesondere kann das Kontaktteil als Stanz oder Drehteil gebildet sein. Durch die Einstückigkeit wird vermieden, dass das Kontaktteil bei dem Schweißvorgang beschädigt wird, insbesondere dass eine Verbindung zwischen dem ersten und zweiten Abschnitt aufgelöst wird. Andererseits wird erreicht, dass das Kontaktteil dauerhaft dynamischen Umweltbedingungen standhält.

Gegenständlich wird nunmehr vorgeschlagen, den Anpressdruck und somit auch die eingetragene Energie an der Kontaktstelle zwischen dem Kontaktteil und dem Flachleiter dadurch zu erhöhen, dass die Kontaktstelle im Bereich des Flansches des Kontaktteils gebildet ist und der Flansch im Bereich der dem Leiter zugewandten Oberfläche (Kontaktoberfläche) Rücksprünge und/oder Vorsprünge aufweist. Somit kommt es beim Verschweißen dazu, dass die Kontaktoberfläche des Kontaktteils, also die dem Leiter zugewandte Oberfläche des Flansches, mit nur einer geringen Auflagefläche auf dem Leiter aufliegt. In diese geringe Auflagefläche wird die gesamte Schweißenergie eingetragen, so dass erheblich höhere Temperaturen bei gleichem Anpressdruck ermöglicht werden. Dies führt dazu, dass sowohl das Kontaktteil, insbesondere eine Beschichtung des Kontaktteils, als auch der Leiter aufschmilzt. Beim Verschweißen tritt eine wesentlich höhere Flächenpressung zu Beginn des Schweißvorgangs auf. Der Werkstoff des Leiters sowie der Werkstoff des Kontaktteils und/oder seine Beschichtung schmelzen auf. Der aufgeschmolzene Werkstoff, insbesondere der des Leiters, kann so in Rücksprünge der Kontaktoberfläche fließen und nach dem Verschweißen dort aushärten, so dass neben einem Stoffschluss zusätzlich ein Formschluss hergestellt werden kann.

Gemäß einem Ausführungsbeispiel wird vorgeschlagen, dass die dem Leiter zugewandte Oberfläche reliefförmig, insbesondere regelmäßig reliefförmig ist. Die Vorsprünge der strukturierten Oberfläche liegen an ihren Kulminationspunkten bevorzugt in einer gleichen Ebene und beim Schweißprozess auf dem Leiter auf. Die jeweiligen lokalen Maxima der Vorsprünge sind kleinflächig, so dass es nur zu einer geringen Auflagefläche kommt, und somit der Anpressdruck bei gleicher Anpresskraft erheblich höher ist, als bei einer vollflächigen Auflage des Flansches auf dem Leiter. Dieser erhöhte Anpressdruck führt zu einem verbesserten Aufschmelzen beider Fügepartner.

Ein Vorsprung kann als Berg bezeichnet werden, ein Rücksprung kann als Tal bezeichnet werden.

Auch wird vorgeschlagen, dass die dem Leiter zugewandte Oberfläche buckelförmig, insbesondere regelmäßig buckelförmig gebildet ist. Die Buckel können Berge und Täler aufweisen. Eine Mehrzahl der Berge, insbesondere alle Berge der Buckel können im Bereich ihrer Kulminationspunkte in einer Ebene liegen. Auch eine Mehrzahl der Täler, insbesondere alle Täler können im Bereich ihrer Kulminationspunkte in einer Ebene liegen.

Insbesondere beim Rotationsreibschweißen wird das Kontaktteil bevorzugt um seinen Mittelpunkt rotiert. Um dabei gute Schweißergebnisse zu erzielen, wird vorgeschlagen, dass der zumindest eine Rücksprung und/oder der zumindest eine Vorsprung umlaufend ist. Dabei kann der Rücksprung und/oder der Vorsprung umlaufend zum Mittelpunkt, insbesondere kreisförmig zum Mittelpunkt der dem Leiter zugewandten Oberfläche verlaufen. Auch ist es möglich, dass ein Rücksprung oder ein Vorsprung nur über einen gewissen Winkelabschnitt verläuft. Zwischen zwei benachbarten Rücksprüngen oder Vorsprüngen können Bereiche gebildet sein, in denen die dem Leiter zugewandte Oberfläche unverändert ist. So kann ein umlaufender Vorsprung durch mehrere voneinander beabstandete Winkelabschnitte gebildet sein, in denen jeweils ein Vorsprung, insbesondere in einem Kreisbogensegment um den Mittelpunkt gebildet ist.

Gemäß dieser Erfindung wird vorgeschlagen, dass der zumindest eine Vorsprung hinterschnitten ist. Durch die eingebrachte Schweißenergie schmilzt der Werkstoff des Leiters und/oder Kontaktteils, was auch als Plastifizieren bezeichnet werden kann. Beim Plastifizieren des Werkstoffs des Leiters und/oder Kontaktteils kann der plastifizierte Werkstoff in den Hinterschnitt fließen. Nach dem Aushärten des Werkstoffs bildet sich somit nicht nur ein Stoffschluss im Bereich der intermetallischen Verbindung, sondern auch ein Formschluss im Bereich des ausgehärteten Werkstoffs im Hinterschnitt. Der Vorsprung ist insbesondere tropfenförmig oder omegaförmig in der Oberfläche gebildet.

Gemäß einem Ausführungsbeispiel wird vorgeschlagen, dass der Vorsprung bogenförmige, insbesondere teilkreisförmige Oberflächenabschnitte aufweist. In einem Querschnitt parallel zur Längsachse des Kontaktteils kann der Vorsprung bogenförmige, insbesondere teilkreisförmige Abschnitte aufweisen. Dabei ist es möglich, dass im Bereich eines konkaven Oberflächenabschnittes ein oberer Kulminationspunkt des Vorsprungs gebildet ist. In einem konvexen Bereich kann ein Hinterschnitt gebildet sein.

Gemäß einem Ausführungsbeispiel wird vorgeschlagen, dass der zumindest eine Rücksprung bogenförmige, insbesondere teilkreisförmige Oberflächenabschnitte aufweist. Insbesondere in einem Schnitt parallel zur Längsachse des Kontaktteils können bogenförmige, insbesondere teilkreisförmige Abschnitte im Bereich des Rücksprungs gebildet sein. Insbesondere ist der Rücksprung durch einen konvexen Bereich gebildet.

Gemäß einem Ausführungsbeispiel wird vorgeschlagen, dass das Kontaktteil metallisch beschichtet ist. Eine metallische Beschichtung kann insbesondere eine Verzinnung oder eine Vernickelung sein. Insbesondere kann eine Beschichtung auch mehrschichtig sein, insbesondere verzinnt mit einer Unternickelung.

Gemäß einem Ausführungsbeispiel wird vorgeschlagen, dass das Kontaktteil als Schweißauge gebildet ist. Ein solches Schweißauge eignet sich insbesondere zum anschließenden Verschrauben mit einem Bolzen, an dem der Rundleiter angeordnet werden kann.

Gemäß einem Ausführungsbeispiel wird vorgeschlagen, dass der erste Abschnitt stabförmig oder rohrförmig gebildet ist.

Der zweite Abschnitt, die als Flansch gebildet ist, kann eine runde oder eckige Grundfläche aufweisen.

Eine Durchgangsbohrung kann sowohl den ersten als auch den zweiten Abschnitt durchdringen. Die Durchgangsbohrung kann im Bereich eines Mittelpunktes des ersten und des zweiten Abschnitts in einem Schnitt senkrecht zur Längsachse des Kontaktteils liegen. Die Durchgangsbohrung kann rund oder eckig, mit radial weiter nach außen ragenden Bereichen und radial weniger weit nach außen ragenden Bereichen, insbesondere als Mehrkant oder als Mehrrundform gebildet sein.

Beim Rotationsreibschweißen muss das Kontaktteil sowohl mit einem ausreichend großen Anpressdruck gegen den Leiter gepresst werden und gleichzeitig in Rotation versetzt werden. Ein Reibschweißwerkzeug muss dabei während es rotiert und das Kontaktteil in Rotation versetzt, das Kontaktteil auch noch gleichzeitig gegen den Leiter pressen.

Es hat sich herausgestellt, dass die elektrische Kontaktierung eines elektrischen Abgangs an dem Kontaktteil auch dann ausreichend gut ist, wenn der hierfür notwendige Bolzen nicht unmittelbar an dem Innenumfang des als Hülse gebildeten Kontaktteils anliegt. Es reicht aus, wenn ein Bolzenkopf stirnseitig an dem Kontaktteil anliegt. Dann ist ein ausreichend guter elektrischer Kontakt möglich. Auf der anderen Seite führt dies dazu, dass zwischen der Durchgangsöffnung in dem Kontaktteil bzw. der inneren Mantelfläche der Durchgangsöffnung in dem Kontaktteil und der äußeren Mantelfläche des Bolzens weder Formschluss notwendig ist, noch müssen die Querschnitte komplementär zueinander sein. Vielmehr ist erkannt worden, dass es für den Herstellungsprozess vorteilhaft ist, wenn in dem Kontaktteil eine Durchgangsöffnung vorgesehen ist, die als Innenmehrkant gebildet ist. Der Innenumfang der Durchgangsöffnung ist bevorzugt mehrkantig gebildet. Auf der anderen Seite ist der Außenumfang der Kontaktteil vorzugsweise im Wesentlichen rund oder eckig.

In diesem Zusammenhang sei erwähnt, dass unter dem Begriff Innenmehrkant auch eine Vielrundform verstanden werden kann. Insbesondere ist die Durchgangsöffnung als Mitnahmeprofil gebildet, mit Abschnitten mit kleinerem Radius und Abschnitten mit größerem Radius, wobei die Abschnitte abwechselnd aufeinanderfolgen. Eine besonders gute Passform des Kontaktteils an der Durchgangsöffnung wird dadurch erreicht, dass sich der Außenumfang des ersten Abschnitts ausgehend von dem zweiten Abschnitt in axialer Richtung der Durchgangsöffnung verjüngt. Der erste Abschnitt ist dabei vorzugsweise kegelstumpfförmig.

Der Innenumfang der Durchgangsöffnung des Leiters ist im Wesentlichen kongruent zu dem Außenumfang des stab- oder rohrförmigen zweiten Abschnitts des Kontaktteils. Dahingegen ist der Innenumfang der Durchgangsöffnung in dem Kontaktteil mehrkantig gebildet und weder kongruent zu dessen Außenumfang noch kongruent noch zu einem in die Durchgangsöffnung des Kontaktteils einsteckbaren Bolzen.

Die Erstreckung des ersten Abschnitts in axialer Richtung entspricht vorzugsweise der Materialstärke des elektrischen Leiters in Richtung der Durchgangsöffnung. Dann ist sichergestellt, dass der erste Abschnitt vorzugsweise flächenbündig an der Durchgangsöffnung des elektrischen Leiters anliegt.

Wie zuvor erwähnt, ergibt sich das Problem der Kontaktierung zwischen Flachleitung und Rundleitung bevorzugt für den Fall, dass die Flachleitung aus Aluminium gebildet ist. Die Verwendung eines Aluminiumwerkstoffs als Material für die Flachleitung hat große Vorteile im Hinblick auf Materialkosten und Gewicht, so dass es bevorzugt ist, dass die Flachleitung aus einem Aluminiumwerkstoff oder einer Legierung hiervon gebildet ist.

Das Kontaktteil kann aus einem Werkstoff aus Übergangsmetall oder einer Legierung daraus gebildet ist. Bevorzugt ist die Verwendung einer Edelstahl-, Kupfer- oder Messinghülse. Durch die Verwendung des Kontaktteils aus einem anderen Material als Aluminium, ergeben sich zweierlei Vorteile. Zum Einen wird verhindert, dass die elektrische Kontaktierung zwischen Anschlussbolzen und Leitung durch Aluminiumoxid verschlechtert wird. Zum Anderen kann bei der Verwendung eines härteren Materials als Aluminium die mechanische Festigkeit der Verbindung zwischen Flachleitung und Anschlussbolzen erhöht werden. Bei der Verwendung von Edelstahl, Kupfer oder Messing kann gewährleistet werden, dass die mechanische Beanspruchung bei einer Verschraubung des Anschlussbolzens durch das Kontaktteil keine wesentliche Verformung des Kontaktteils hervorruft. Auch ist bei mechanischer Dauerbelastung gewährleistet, dass sich die Stirnflächen des Kontaktteils nicht wesentlich verformen, so dass eine dauerhaft feste Verbindung zwischen Anschlussbolzen und Hülse gewährleistet ist. Auch kann das Kontaktteil metallisch beschichtet sein, wobei eine Beschichtung insbesondere aus Nickel, Zinn oder Legierungen davon gebildet sein kann. Eine Beschichtung des Kontaktteils kann angepasst an ein Material eines Anschlussbolzens, einer Schrauben, eines Anschluss eines Verbrauchers oder dergleichen sein.

Ein weiterer Aspekt ist ein Kontaktteil zur Kontaktierung mit einem elektrischen Leiter in der oben beschriebenen Art und Weise. Der Kragen (Flansch) des Kontaktteils im Bereich des zweiten Abschnittes ist auf einer Seite, die in Kontakt mit dem Leiter gebracht wird, mit zumindest einem Rücksprung und/oder einem Vorsprung gebildet.

Gemäß einem weiteren Aspekt wird ein Verfahren zur Herstellung eines elektrischen Leiters vorgeschlagen. Hierbei wird ein zuvor beschriebener elektrischer Leiter mit einem zuvor beschriebenen Kontaktteil derart in Verbindung gebracht, dass das Kontaktteil mittels Widerstandsschweißen, insbesondere Buckelschweißen, Reibschweißen, insbesondere Rotationsreibschweißen oder Magnetimpulsschweißen mit dem Leiter verschweißt wird. Durch die reliefförmige Oberfläche liegt das Kontaktteil im Bereich des Flansches mit nur einer geringen Auflagefläche auf dem Leiter auf. Die während des Schweißens eingeräumte Schweißenergie verteilt sich somit auf die sehr geringe Kontaktfläche, so dass selbst eine Beschichtung des Kontaktteils mit einem Material, welches einen hohen Schmelzpunkt hat, aufschmilzt. Dadurch wird eine sichere, stoffschlüssige Verbindung zwischen Kontaktteil und Leiter hergestellt.

Das Kontaktteil wird zunächst mit den Vorsprüngen in Kontakt mit dem Leiter gebracht. Die Kulminationspunkte einiger oder aller Vorsprünge liegen bevorzugt in einer Ebene. In dieser Ebene kommt es zu einem Kontakt mit dem Leiter.

Anschließend wird in die so gebildete Kontaktfläche Energie eingebracht, mittels eines der oben genannten Schweißverfahrens. Durch diese eingebrachte Energie plastifiziert sowohl die Oberfläche des Kontaktteils als auch die Oberfläche des Leiters. Der plastifizierte Werkstoff kann in einen Rücksprung fließen und nach dem Schweißen dort aushärten. Dadurch wird neben einer stoffschlüssigen auch eine formschlüssige Verbindung hergestellt.

Nachfolgend wird der Gegenstand anhand einer Ausführungsbeispiele zeigenden Zeichnung näher erläutert. In der Zeichnung zeigen:
Fig. 1 einen Leiter mit einem Kontaktteil;
Fig.2c ein Kontaktteil gemäß der Erfindung,

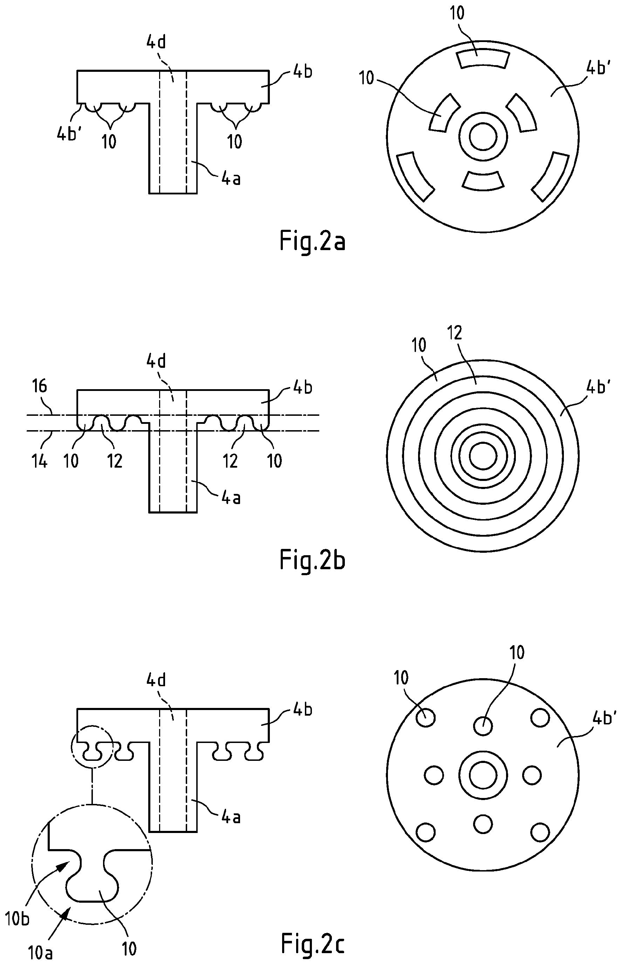

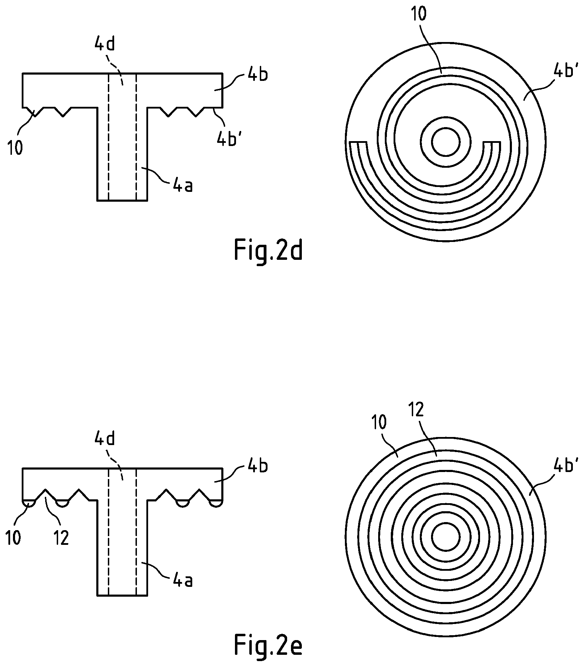

Fig.2a, 2b, 2d, 2e verschiedene Kontaktteile gemäß Ausführungsbeispielen, die nicht unter den Anspruchsgegenstand fallen;

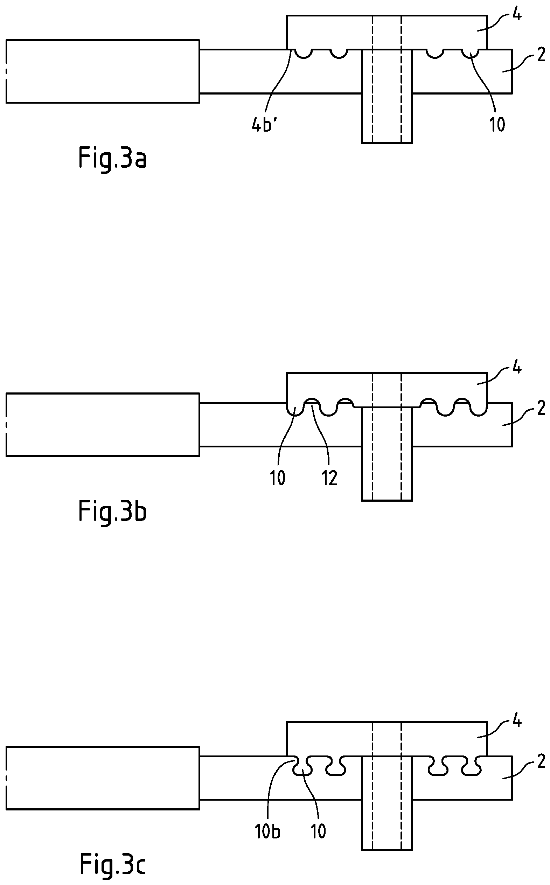

Fig.3c ein Kontaktteil mit Leiter gemäß der Erfindung,
Fig.3a, 3b verschiedene Kontaktteile mit Leitern gemäß Ausführungsbeispielen, die nicht unter den Anspruchsgegenstand fallen;

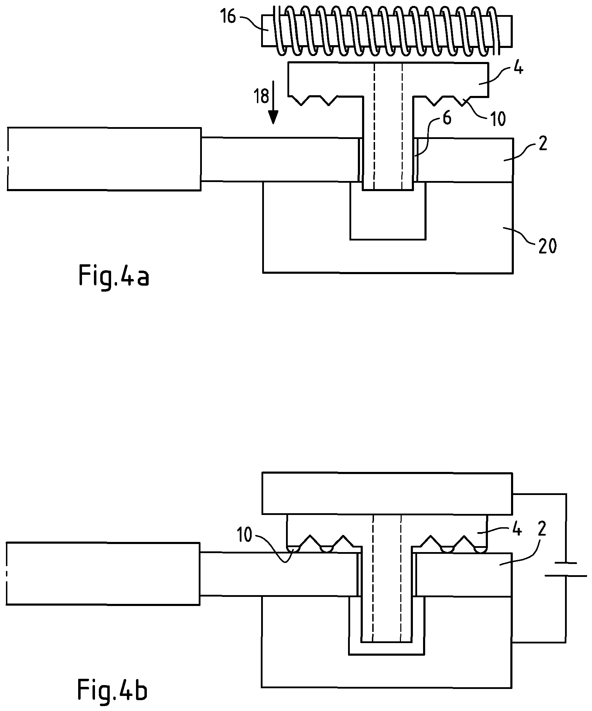

Fig. 4a-c die Verbindung des Kontaktteiles mit dem Leiter mittels Schweißen gemäß Ausführungsbeispiel;

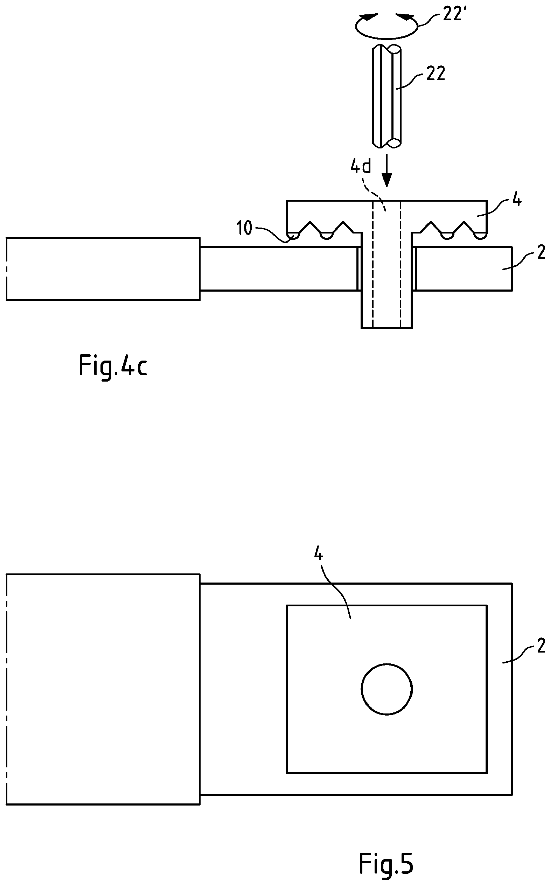

Fig. 5 eine Draufsicht auf einen Leiter mit einem Kontaktteil.

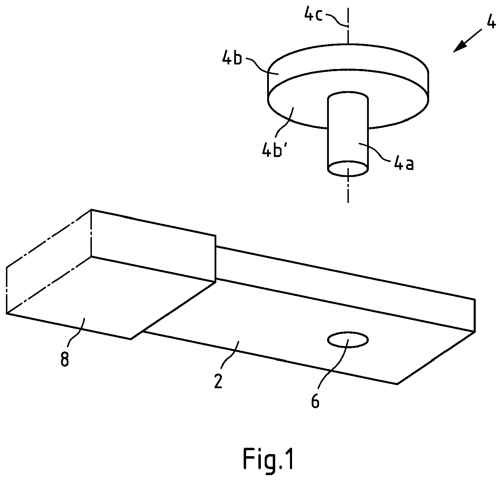

Fig. 1 zeigt einen elektrischen Leiter 2 mit einem Kontaktteil 4. Der elektrische Leiter 2 weist eine Durchgangsöffnung 6 auf. Der elektrische Leiter 2 ist insbesondere als Flachleiter gebildet. Der elektrische Leiter 2 hat insbesondere eine dem Kontaktteil zugewandte ebene Oberfläche. Insbesondere ist die Durchgangsöffnung 6 im Bereich eines stirnseitigen Endes des Leiters 2 gebildet. Der Leiter 2 ist vorzugsweise entfernt von dem stirnseitigen Ende mit einer Isolation 8 umgeben. Der Leiter 2 ist bevorzugt aus einem Aluminiumwerkstoff oder einem Kupferwerkstoff.

Das Kontaktteil 4 hat einen ersten Abschnitt 4a sowie einen zweiten Abschnitt 4b. In Richtung der Längsachse 4c des Kontaktteils 4 erstreckt sich der erste Bereich 4a rohrförmig oder stabförmig. Radial nach außen erstreckt sich der zweite Abschnitt 4b in der Form eines Flansches. Der zweite Abschnitt 4b hat eine Kontaktoberfläche 4b', die im verbundenen Zustand dem Leiter 2 zugewandt ist. Diese Kontaktoberfläche 4b` ist gegenständlich profiliert, wie nachfolgend dargestellt werden wird.

Die Fig. 2a, 2b, 2d, 2e, 3a und 3b zeigen Ausführungsbeispiele, die nicht unter den Anspruchsgegenstand fallen. Die Fig.2c und Fig. 3c zeigen Ausführungen gemäß dieser Erfindung. Die Figs. 2a-c zeigen jeweils auf der linken Seite einen Querschnitt parallel zur Längsachse 4c und eine Unteransicht senkrecht zur Längsachse 4c auf die Kontaktoberfläche 4b'.

Fig. 2a zeigt ein Kontaktteil 4, bei dem die Kontaktoberfläche 4b` Vorsprünge 10 aufweist. Die Vorsprünge 10 sind teilkreisförmig in der Form eines Wulstes auf der Kontaktoberfläche 4b` aufgebracht. Durch den ersten Abschnitt 4a als auch den zweiten Abschnitt 4b erstreckt sich in Richtung der Längsachse 4c eine Durchgangsbohrung 4d.

Die Vorsprünge 10 verlaufen umlaufend um die Durchgangsbohrung 4d in Winkelabschnitten. Fig. 2a zeigt, dass jeweils beabstandet zueinander in Winkelabschnitten die Vorsprünge 10 zueinander angeordnet sind. Insbesondere können radial von innen nach außen zwei oder mehr Vorsprünge 10 vorgesehen sein. Die von den Vorsprüngen 10 eingenommen Winkelabschnitte können intermittierend, wie in der Fig. 2a gezeigt oder einander überlappend sein.

Fig. 2b zeigt ein Kontaktteil 4 mit Vorsprüngen 10 und Rücksprüngen 12. Zu erkennen ist, dass die Kulminationspunkte der Vorsprünge 10 in einer ersten Ebene 14 liegen und die Kulminationspunkte der Rücksprünge 12 in einer zweiten Ebene 16 liegen.

In der Ansicht auf die Kontaktoberfläche 4b` ist in der Fig. 2b zu erkennen, dass die Vorsprünge 10 und Rücksprünge 12 vollständig umlaufend, kreisförmig um die Durchgangsöffnung 4d gebildet sind.

Fig. 2c zeigt Vorsprünge 10 mit Hinterschnitten nach dieser Erfindung. Der Vorsprung 10 hat einen konvexen Bereich 10a sowie einen konkaven Bereich 10b. Der konkave Bereich 10b ist als Hinterschnitt gebildet. Der Vorsprung 10 gemäß der Fig. 2c ist omegaförmig gebildet. Auf der Oberfläche 4b` können die Vorsprünge 10 unregelmäßig oder regemäßig verteilt sein. Eine regelmäßige Verteilung ist in der Fig. 2c gezeigt.

Fig. 2d zeigt Vorsprünge 10, welche dornenförmig gebildet sind und umlaufend auf der Kontaktoberfläche 4b` angeordnet sind.

Fig. 2e zeigt teilkreisförmige Vorsprünge 10 sowie eckige Rücksprünge 12. Auch hier können die Vorsprünge 10 und Rücksprünge 12 umlaufend an der Kontaktoberfläche 4b' angeordnet sein. Es versteht sich, dass die Anordnung der Vorsprünge 10 und Rücksprünge 12 auf der Oberfläche 4b vollständig umlaufend, teilweise umlaufend, in Winkelabschnitten, intermittierend oder überlappend, regelmäßig oder unregelmäßig frei variiert werden kann.

Fig. 3a zeigt das Kontaktteil 4 gemäß der Fig. 2a auf einem Leiter 2. Zu erkennen ist, dass die Vorsprünge 10 in das Material des Leiters 2 beim Verschweißen eingedrungen sind. Das plastifizierte Material ist im Bereich des Abstandes zwischen den Vorsprüngen 10 ausgehärtet. Die Kontaktoberfläche 4b` liegt vollständig auf dem Leiter 2 auf.

Fig. 3b zeigt ein Kontaktteil 4 gemäß Fig. 2b in Verbindung mit einem Leiter 2. Auch hier sind die Vorsprünge 10 in das Material des Leiters 2 eingedrungen.

Fig. 3c zeigt ein Kontaktteil 4 gemäß Fig. 2c an einem Leiter 2. Während des Verschweißens plastifiziert das Material des Leiters 2 und fließt somit in die Hinterschnitte 10b der Vorsprünge 10.

Fig. 4a zeigt ein Verschweißen eines Kontaktteils 4 mit einem Leiter 2 mittels Elektromagnetimpulsschweißen. Eine Spule 16 wird bestromt, wodurch das Kontaktteil 4 in Richtung 18 auf den Leiter 2 beschleunigt wird. Der Leiter 2 ist an einem Gegenlager 20 gelagert. Das Kontaktteil 4 wird durch die Durchgangsöffnung 6 hindurch in Richtung 18 beschleunigt. Die Vorsprünge 10 treffen auf die Oberfläche des Leiters 2 auf. Dabei kommt es sowohl zu einem Verformen als auch einem Plastifizieren der Werkstoffe, so dass sich eine stoffschlüssige und/oder formschlüssige Verbindung bildet.

Fig. 4b zeigt ein Widerstandsschweißen. Dabei werden die Vorsprünge 10 in Kontakt mit dem Leiter 2 gebracht. Das Kontaktteil 4 wird mit einer Elektrode bestromt und der Leiter 2 wird ebenfalls mit einer Elektrode bestromt. Durch die geringe Auflagefläche zwischen dem Kontaktteil 4 und dem Leiter 2 im Bereich der Vorsprünge 10 kommt es zu hohen Übergangswiderständen, so dass das Material des Kontaktteils 4 als auch das Material des Leiters 2 aufschmilzt. Durch die geringe Auflagefläche schmilzt nicht nur das Material des Leiters 2 sondern gegebenenfalls auch ein Beschichtungsmaterial des Kontaktteils 4 auf.

Fig. 4c zeigt ein Rotationsreibschweißen, bei dem ein Rotationsstempel 22 in die Durchgangsöffnung 4d gesteckt wird. Der Rotationsstempel kann als Mehrkant in einem Innenmehrkant der Durchgangsöffnung 4d angelegt werden. Der Rotationsstempel 22 wird in Richtung 22' rotiert, wobei dann das Kontaktteil 4 mit den Vorsprüngen 10 auf dem Leiter 2 aufliegt und die Werkstoffe plastifizieren.

Fig. 5 zeigt eine Draufsicht auf ein Kontaktteil 4. Zu erkennen ist, dass das Kontaktteil 4 eine viereckige Grundfläche hat.

Mit Hilfe des gezeigten Kontaktteils ist es möglich, ein sicheres Verschweißen zu gewährleisten, selbst wenn das Kontaktteil metallisch beschichtet ist, insbesondere mit einem Werkstoff mit einem hohen Schmelzpunkt, insbesondere einem Schmelzpunkt höher als dem Schmelzpunkt des Leiters und/oder des Kontaktteils 4.

## Patentansprüche

1. Anordnung eines elektrischen Leiters (2), insbesondere Flachleiter und eines Kontaktteils,
- wobei der Leiter (2) zumindest eine Durchgangsöffnung (6) aufweist,
- wobei das Kontaktteil (4) an der Durchgangsöffnung (6) stoffschlüssig mit dem Leiter (2) verbunden ist, wobei das Kontaktteil (4) in axialer Richtung (18) einen ersten Abschnitt (4a) und einen zweiten Abschnitt (4b) aufweist, wobei
- der zweite Abschnitt (4b) als Flansch gebildet ist und eine dem Leiter (2) zugewandte Seite des Flansches eine zumindest einen Vorsprung (10) aufweisende und mit dem Leiter (2) verschweißte Oberfläche hat,
**dadurch gekennzeichnet,**
- **dass** der zumindest eine Vorsprung (10) hinterschnitten ist.

2. Anordnung nach Anspruch 1,
**dadurch gekennzeichnet,**
- **dass** die dem Leiter (2) zugewandte Oberfläche reliefförmig, insbesondere regelmäßig reliefförmig oder buckelförmig, insbesondere regelmäßig buckelförmig gebildet ist, wobei insbesondere der Vorsprung (10) als Buckel gebildet ist.

3. Anordnung nach einem der vorangehenden Ansprüche,
**dadurch gekennzeichnet,**
- **dass** der zumindest eine Vorsprung (10) umlaufend, insbesondere koaxial umlaufend um einen Mittelpunkt der dem Leiter zugewandten Oberfläche (4b') verlaufen.

4. Anordnung nach einem der vorangehenden Ansprüche,
**dadurch gekennzeichnet,**
- **dass** der zumindest eine Vorsprung (10) teilkreisförmige Oberflächenabschnitte aufweist, insbesondere dass der zumindest eine Vorsprung (10) konkave und konvexe Bereiche (10a, 10b) aufweist.

5. Anordnung nach einem der vorangehenden Ansprüche,
**dadurch gekennzeichnet,**
- **dass** das Kontaktteil (4) metallisch beschichtet ist.

6. Anordnung nach einem der vorangehenden Ansprüche,
**dadurch gekennzeichnet,**
- **dass** das Kontaktteil (4) als Schweißauge gebildet ist.

7. Anordnung nach Anspruch 1,
**dadurch gekennzeichnet,**
- **dass** der erste Abschnitt (4a) stabförmig oder rohförmig gebildet ist.

8. Anordnung nach Anspruch 1,
**dadurch gekennzeichnet,**
- **dass** der zweite Abschnitt (4b) eine runde oder eckige Grundfläche aufweist.

9. Anordnung nach einem der vorangehenden Ansprüche,
**dadurch gekennzeichnet,**
- die der erste Abschnitt (4a) einen im Wesentlichen runden Außenumfang aufweist, und
- dass der erste Abschnitt (4a) eine Durchgangsöffnung (4d) aufweist, wobei die Durchgangsöffnung (4d) als Innenmehrkant gebildet ist.

10. Anordnung nach einem der vorangehenden Ansprüche,
**dadurch gekennzeichnet,**
- **dass** der erste und der zweite Abschnitt (4a, 4b) einstückig gebildet sind.

11. Anordnung nach einem der vorangehenden Ansprüche,
**dadurch gekennzeichnet,**
- **dass** der erste Abschnitt (4a) stoffschlüssig an dem Innendurchmesser der Durchgangsöffnung (6) angeordnet ist, insbesondere reibgeschweißt ist.

12. Anordnung nach einem der vorangehenden Ansprüche,
**dadurch gekennzeichnet,**
- **dass** der Flansch mit seiner dem Leiter (2) zugewandten Oberfläche (4b') mit dem Leiter (2) reibgeschweißt ist.

13. Anordnung nach einem der vorangehenden Ansprüche,
**dadurch gekennzeichnet,**
- **dass** sich der Außenumfang des ersten Abschnitts (4a) ausgehend von dem zweiten Abschnitt (4b) in axialer Richtung der Durchgangsöffnung (6) verjüngt.

14. Anordnung nach einem der vorangehenden Ansprüche,
**dadurch gekennzeichnet,**
- **dass** das Kontaktteil (4) aus einem anderen metallischen Werkstoff gebildet ist als der Leiter (2), insbesondere dass der Leiter (2) aus einem Aluminiumwerkstoff gebildet ist und das Kontaktteil (4) aus einem Kupferwerkstoff oder dass der Leiter (2) aus einem Kupferwerkstoff gebildet ist und das Kontaktteil (4) aus einem Aluminiumwerkstoff gebildet ist.

15. Verfahren zur Herstellung einer Anordnung nach einem der vorangehenden Ansprüche,
- wobei das Kontaktteil (4) mittels Widerstandsschweißen, insbesondere Buckelschweißen, Reibschweißen, insbesondere Rotationsreibschweißen oder Magnetimpulsschweißen mit dem Leiter (2) verschweißt wird,
- wobei das Kontaktteil (4) mit seinem zweiten Abschnitt (4b) auf der Oberfläche des Leiters verschweißt wird,
**dadurch gekennzeichnet,**
- **dass** bei Verschweißen der Werkstoff des Leiters (2) und/oder des Kontaktteils (4) durch die eingebrachte Schweißenergie plastifiziert und dass der plastifizierte Werkstoff des Leiters (2) in den Hinterschnitt fließt und nach dem Schweißen in dem Hinterschnitt aushärtet.

## Claims

1. Arrangement of an electrical conductor (2), in particular flat conductor, and a contact part comprising, wherein
- the conductor (2) has at least one through opening, wherein
- the contact part (4) is connected to the conductor (2) at the through-opening in a material bond, wherein the contact part (4) has in its axial direction (18) a first section (4a) and a second section (4b), wherein
- the second section (4b) is formed as a flange and a side of the flange facing the conductor (2) has a surface that is welded to the conductor (2) and which has at least one protrusion (10),
**characterized in that**
- the protrusion (10) is undercut.

2. Arrangement according to claim 1,
**characterized in that**
- the surface facing the conductor (2) is formed in a relief shape, in particular in a regular relief shape, or in a bump shape, in particular in a regular bump shape, wherein in particular the protrusion (10) being formed as a bump.

3. Arrangement according to any one of the preceding claims,
**characterized in that**
- the at least one protrusion (10) extends circumferentially, in particular coaxially circumferentially, about a center point of the surface (4b') facing the conductor.

4. Arrangement according to any one of the preceding claims,
**characterized in that**
- the at least one protrusion (10) has part-circular surface portions, in particular **in that** the at least one protrusion (10) has concave and convex regions.

5. Arrangement according to any one of the preceding claims,
**characterized in that**
- the contact part (4) is metallically coated.

6. Arrangement according to any one of the preceding claims,
**characterized in that**
- the contact part is formed as a welding eye.

7. Arrangement according to claim 1,
**characterized in that**
- the first section (4a) is formed in the form of a rod or a blank.

8. Arrangement according to claim 1,
**characterized in that**
- the second section (4b) has a round or angular base surface.

9. Arrangement according to any one of the preceding claims,
**characterized in that**
- the first section (4a) has a substantially round outer circumference, and
- the first section (4a) has a through opening (4d), the through opening (4d) being formed as an polygonal socket.

10. Arrangement according to any one of the preceding claims,
**characterized in that**
- the first and second sections (4a, 4b) are formed integrally.

11. Arrangement according to any one of the preceding claims,
**characterized in that**
- the first section (4a) is materially bonded on the inner diameter of the through-opening (6), in particular friction-welded.

12. Arrangement according to any one of the preceding claims,
**characterized in that**
- the flange is friction-welded to the conductor (2) with its surface (4b') facing the conductor (2).

13. Arrangement according to any one of the preceding claims,
**characterized in that**
- the outer circumference of the first section (4a) tapers from the second section (4b) in the axial direction of the through opening (6).

14. Arrangement according to any one of the preceding claims,
**characterized in that**
- the contact part (4) is formed from a different metallic material than the conductor (2), in particular **in that** the conductor (2) is formed from an aluminum material and the contact part (4) is formed from a copper material, or **in that** the conductor (2) is formed from a copper material and the contact part (4) is formed from an aluminum material.

15. Method of manufacturing an arrangement according to any one of the preceding claims, wherein
- the contact part (4) is welded to the conductor (2) by means of resistance welding, in particular protrusion welding, friction welding, in particular rotation friction welding, or magnetic pulse welding, wherein
- the contact part (4) is welded with its second section (4b) on the surface of the conductor,
**characterized in that**
- during welding, the material of the conductor (2) and or the contact part (4) is plasticized by the welding energy introduced, and **in that** at least parts of the plasticized material of the conductor (2) flow into the undercut and harden in the undercut after welding.

## Revendications

1. Arrangement d'un conducteur électrique (2), notamment d'un conducteur plat et d'une pièce de contact,
- le conducteur (2) ayant au moins une ouverture de passage (6),
- la pièce de contact (4) étant reliée par une liaison de matière au conducteur (2) au niveau de l'ouverture de passage (6),
- la pièce de contact (4) ayant, dans la direction axiale (18), une première partie (4a) et une deuxième partie (4b), où
- la deuxième partie (4b) est formée comme une bride et un côté de la bride tourné vers le conducteur (2) a une surface ayant au moins une saillie (10) et étant soudée avec le conducteur (2),
**caractérisé**
- **en ce que** l'au moins une saillie (10) est contre-dépouillée.

2. Arrangement selon la revendication 1,
**caractérisé**
- **en ce que** la surface tournée vers le conducteur (2) est formée en relief, notamment de manière régulière en relief, ou en bosse, notamment de manière régulière en bosse, la saillie (10) étant notamment formée en bosse.

3. Arrangement selon l'une des revendications précédentes,
**caractérisé**
- **en ce que** l'au moins une saillie (10) s'étend de manière périphérique, notamment de manière coaxiale périphérique autour d'un point central de la surface (4b') tournée vers le conducteur.

4. Arrangement selon l'une des revendications précédentes,
**caractérisé**
- **en ce que** l'au moins une saillie (10) a des parties de surface partiellement circulaires, notamment en ce que l'au moins une saillie (10) a des zones concaves et convexes (10a, 10b).

5. Arrangement selon l'une des revendications précédentes,
**caractérisé**
- **en ce que** la pièce de contact (4) est revêtue métalliquement.

6. Arrangement selon l'une des revendications précédentes,
**caractérisé**
- **en ce que** la pièce de contact (4) est formée en tant qu'oeil de soudage.

7. Arrangement selon la revendication 1,
**caractérisé**
- **en ce que** la première partie (4a) est formée en forme de barre ou en forme brute.

8. Arrangement selon la revendication 1,
**caractérisé**
- **en ce que** la deuxième partie (4b) présente une surface de base ronde ou angulaire.

9. Arrangement selon l'une quelconque des revendications précédentes,
**caractérisé**
- **en ce que** la première partie (4a) présente une périphérie extérieure sensiblement ronde, et
- **en ce que** la première partie (4a) présente une ouverture de passage (4d), l'ouverture de passage (4d) étant formée comme un polygone intérieur.

10. Arrangement selon l'une des revendications précédentes,
**caractérisé**
- **en ce que** la première et la deuxième partie (4a, 4b) sont formées d'une seule pièce.

11. Arrangement selon l'une des revendications précédentes,
**caractérisé**
- **en ce que** la première partie (4a) est disposée par liaison de matière au niveau du diamètre intérieur de l'ouverture de passage (6), notamment est soudée par friction.

12. Arrangement selon l'une des revendications précédentes,
**caractérisé**
- **en ce que** la bride est soudée par friction, par sa surface (4b') tournée vers le conducteur (2), avec le conducteur (2).

13. Arrangement selon l'une des revendications précédentes,
**caractérisé**
- **en ce que** la périphérie extérieure de la première partie (4a) se rétrécit à partir de la deuxième partie (4b) dans la direction axiale de l'ouverture de passage (6).

14. Arrangement selon l'une quelconque des revendications précédentes,
**caractérisé**
- **en ce que** la pièce de contact (4) est formée d'un matériau métallique différent de celui du conducteur (2), notamment en ce que le conducteur (2) est formé d'un matériau à base d'aluminium et la pièce de contact (4) est formée d'un matériau à base de cuivre ou en ce que le conducteur (2) est formé d'un matériau à base de cuivre et la pièce de contact (4) est formée d'un matériau à base d'aluminium.

15. Procédé de fabrication d'un arrangement selon l'une des revendications précédentes,
- dans lequel la pièce de contact (4) est soudée avec le conducteur (2) par soudage par résistance, notamment par bossage, par soudage par friction, notamment par soudage par friction rotative ou par soudage par impulsions magnétiques,
- dans lequel la pièce de contact (4) est fixée par sa deuxième partie (4b) sur la surface du conducteur,
**caractérisé**
- **en ce que**, lors du soudage, le matériau du conducteur (2) et/ou de la pièce de contact (4) est plastifié sous l'effet de l'énergie de soudage appliquée et
- **en ce que** le matériau plastifié du conducteur (2) s'écoule dans la contre-dépouille et, après le soudage, durcit dans la contre-dépouille.
